# EUROPEAN PATENT APPLICATION

(11) **EP 4 836 207 A1**
(43) Date of publication of application: **04.11.2026**
(21) Application number: 24929229.3
(22) Date of filing: 01.11.2024
(51) Int. Cl.: H01R 31/06, H01R 12/50, G02B 6/38

(54) **VEHICLE-MOUNTED OPTOELECTRONIC HYBRID CONNECTOR**

(30) Priority: 15.03.2024 CN 202410295774
(71) Applicant: Accelink Technologies Co., Ltd., Wuhan, Hubei 430000 (CN)
(72) Inventor: TONG, Chao, Wuhan, Hubei 430000 (CN); WEN, Jiazhao, Wuhan, Hubei 430000 (CN); CHENG, Gangxi, Wuhan, Hubei 430000 (CN); ZHU, Xinhai, Wuhan, Hubei 430000 (CN); XIONG, Tao, Wuhan, Hubei 430000 (CN); QUAN, Benqing, Wuhan, Hubei 430000 (CN); LUO, Yong, Wuhan, Hubei 430000 (CN); YE, Lin, Wuhan, Hubei 430000 (CN)
(74) Representative: Patentgruppen A/S
(86) International application number: PCT/CN2024/129313
(87) International publication number: WO 2025/189783

(57) **Abstract**

The present invention relates to the field of optical communications technology, and more particularly, to a vehicle-mounted opto-electronic hybrid connector comprising a BOSA device, an adapter assembly, a male connector, and a PCB daughter board. The adapter assembly comprises an adapter unit, female conductive terminals, and an adapter housing. The BOSA device is snap-fitted to and constrained by the adapter unit, which is mounted on an end face of the adapter housing fixedly coupled to the PCB daughter board. The adapter unit defines first receiving slots that receive the female conductive terminals, and the BOSA device and female conductive terminals are each electrically connected to the PCB daughter board. The male connector comprises a connector housing, a male ferrule assembly, and male conductive terminals. The connector housing mates with the adapter housing to couple the male ferrule assembly to the BOSA device's ferrule assembly and electrically connect the male and female conductive terminals.

## Description

### Cross-Reference

This application claims priority to Chinese Patent Application No. 202410295774.5, filed March 15, 2024, entitled "VEHICLE-MOUNTED OPTO-ELECTRONIC HYBRID CONNECTOR."

### Technical Field

The present disclosure relates to the field of optical communications technology, and more particularly, to a vehicle-mounted opto-electronic hybrid connector.

### Background

A Bi-Directional Optical Sub-Assembly ("BOSA") is a key component in optical communications. By integrating optical transmit and receive devices into a single module, a BOSA performs high-efficiency opto-electronic conversion and optical signal transmission, with increasingly widespread adoption in automotive applications.

As in-vehicle communication requirements continue to grow, Ethernet has become the dominant standard for automotive networks. BOSA devices support highspeed, stable data transmission and multiple data formats and protocols, meeting automotive Ethernet requirements for high bandwidth and low latency. Moreover, in autonomous and intelligent driving applications, BOSA devices are widely used in automotive cameras, radars, and sensor systems. These systems require real-time, accurate transmission of image, video, and sensor data to support autonomous driving, intelligent navigation, collision warning, and other functions. BOSA devices provide high-quality optical signal transmission, ensuring data accuracy and real-time performance in such systems.

During mating of a BOSA device with a male connector, fiber alignment demands extremely high precision, essentially mandating micron-scale coupling. Any force applied off-axis during coupling degrades fiber coupling efficiency and accuracy. However, conventional BOSA-to-connector mating suffers from alignment errors and manufacturing tolerances, which induce insertion/extraction stresses on electrical terminals during mating/unmating-degrading coupling accuracy of the fiber connector's optical channel.

Accordingly, overcoming the deficiencies of the prior art remains an urgent need in this field.

### Summary of the Invention

The present disclosure addresses the problem of insufficient coupling accuracy during mating of a BOSA device with a male connector.

The present disclosure adopts the following technical solutions.

A vehicle-mounted opto-electronic hybrid connector comprises a BOSA device 1, an adapter assembly 2, a male connector 3, and a PCB daughter board 4.

The adapter assembly 2 comprises an adapter unit 20, female conductive terminals 21, and an adapter housing 22. The BOSA device 1 is snap-fitted to and constrained by the adapter unit 20. The adapter housing 22 is fixedly connected to the PCB daughter board 4. The adapter unit 20 defines first receiving slots 200, and the female conductive terminals 21 are received in the first receiving slots 200. The BOSA device 1 and the female conductive terminals 21 are each electrically connected to the PCB daughter board 4. The adapter unit 20 is mounted on an end face of the adapter housing 22.

The male connector 3 comprises a connector housing 30, a male ferrule assembly 31, and male conductive terminals 32. The connector housing 30 mates with the adapter housing 22, thereby coupling the male ferrule assembly 31 to a ferrule assembly of the BOSA device 1 and electrically connecting the male conductive terminals 32 to the female conductive terminals 21.

The present disclosure provides the following advantages. With the adapter assembly 2, the BOSA device 1 is pre-fixed to the adapter unit 20 of the adapter assembly 2. The BOSA device 1 and the adapter assembly 2 are then jointly secured to the PCB daughter board 4. To connect the BOSA device 1 to the male connector 3, the male connector 3 is simply aligned and inserted into the adapter housing 22 to effect coupling with the BOSA device 1, effectively improving mating accuracy therebetween.

In a preferred embodiment, anti-misinsertion protrusions 303 on the connector housing 30 and anti-misinsertion recesses 225 on the adapter housing 22 are positioned and dimensioned such that BOSA devices 1 and male connectors 3 of different configurations cannot mate. Further, second locking recesses 3000 on support bars 300 of the connector housing 30 and second locking tabs 2240 on the adapter housing 22 ensure stable mating between the BOSA device 1 and the male connector 3, enhancing operational reliability of the opto-electronic hybrid connector.

### Brief Description of the Drawings

To more clearly illustrate the technical solutions of embodiments of the present disclosure, the accompanying drawings for illustrating the embodiments are briefly described below. The drawings described herein are merely illustrative of certain embodiments, and those skilled in the art may derive other drawings from these drawings without undue experimentation.
FIG. 1 is an overall structural schematic of a vehicle-mounted opto-electronic hybrid connector according to an embodiment of the present disclosure.
FIG. 2 is an internal structural schematic of a vehicle-mounted opto-electronic hybrid connector according to an embodiment of the present disclosure.
FIG. 3 is a schematic of an adapter assembly of a vehicle-mounted opto-electronic hybrid connector according to an embodiment of the present disclosure.
FIG. 3a is a schematic of an adapter unit separated from an adapter housing in a vehicle-mounted opto-electronic hybrid connector according to an embodiment of the present disclosure.
FIG. 3b is an exploded view of FIG. 3 of a vehicle-mounted opto-electronic hybrid connector according to an embodiment of the present disclosure.
FIG. 4 is a schematic of fixing protrusions of a vehicle-mounted opto-electronic hybrid connector according to an embodiment of the present disclosure.
FIG. 4a is a structural schematic of fixing protrusions of a vehicle-mounted opto-electronic hybrid connector according to an embodiment of the present disclosure.
FIG. 4b is a schematic of an L-shaped retention notch of a vehicle-mounted opto-electronic hybrid connector according to an embodiment of the present disclosure.
FIG. 5 is a schematic of a PCB daughter board of a vehicle-mounted opto-electronic hybrid connector according to an embodiment of the present disclosure.
FIG. 6 is a schematic of a male connector of a vehicle-mounted opto-electronic hybrid connector according to an embodiment of the present disclosure.
FIG. 7 is a schematic of a coupling unit of a vehicle-mounted opto-electronic hybrid connector according to an embodiment of the present disclosure.
FIG. 8 is a schematic of anti-misinsertion protrusions of a vehicle-mounted opto-electronic hybrid connector according to an embodiment of the present disclosure.
FIG. 9 is a schematic of anti-misinsertion recesses of a vehicle-mounted opto-electronic hybrid connector according to an embodiment of the present disclosure.
FIG. 10 is a schematic of a BOSA device of a vehicle-mounted opto-electronic hybrid connector according to an embodiment of the present disclosure.
FIG. 11 is a schematic of an adapter unit of a vehicle-mounted opto-electronic hybrid connector according to an embodiment of the present disclosure.
FIG. 11a is a schematic of a cylindrical recess of a vehicle-mounted opto-electronic hybrid connector according to an embodiment of the present disclosure.
FIG. 11b is a schematic of a first retention recess of a vehicle-mounted opto-electronic hybrid connector according to an embodiment of the present disclosure.
FIG. 12 is a schematic of an adapter interface of a vehicle-mounted opto-electronic hybrid connector according to an embodiment of the present disclosure.
FIG. 13 is a schematic of a first receiving slot of a vehicle-mounted opto-electronic hybrid connector according to an embodiment of the present disclosure.
FIG. 14 is a schematic of a female conductive terminal of a vehicle-mounted opto-electronic hybrid connector according to an embodiment of the present disclosure.
FIG. 15 is a schematic of a first through-hole of a vehicle-mounted opto-electronic hybrid connector according to an embodiment of the present disclosure.
FIG. 16 is a schematic of a first inclined surface of a vehicle-mounted opto-electronic hybrid connector according to an embodiment of the present disclosure.
FIG. 17 is a schematic of a second inclined surface of a vehicle-mounted opto-electronic hybrid connector according to an embodiment of the present disclosure.
FIG. 17a is a schematic of a second notch and a third notch of a vehicle-mounted opto-electronic hybrid connector according to an embodiment of the present disclosure.
FIG. 18 is a schematic of fixing protrusions of a vehicle-mounted opto-electronic hybrid connector according to an embodiment of the present disclosure.
FIG. 19 is a schematic of fixing protrusions securing welding electrodes of a vehicle-mounted opto-electronic hybrid connector according to an embodiment of the present disclosure.
FIG. 20 is a schematic of an adapter housing of a vehicle-mounted opto-electronic hybrid connector according to an embodiment of the present disclosure.
FIG. 20a is a structural schematic of an adapter housing of a vehicle-mounted opto-electronic hybrid connector according to an embodiment of the present disclosure.
FIG. 21 is a schematic of a support bar of a vehicle-mounted opto-electronic hybrid connector according to an embodiment of the present disclosure.
FIG. 21a is a schematic of an elongated recess receiving a retention feature of a vehicle-mounted opto-electronic hybrid connector according to an embodiment of the present disclosure.
FIG. 22 is a schematic of a guard structure of a vehicle-mounted opto-electronic hybrid connector according to an embodiment of the present disclosure.
FIG. 23 is a schematic of a width of a fourth notch of a vehicle-mounted opto-electronic hybrid connector according to an embodiment of the present disclosure.
FIG. 24 is a schematic of a width of a support bar of a vehicle-mounted opto-electronic hybrid connector according to an embodiment of the present disclosure.
FIG. 25 is a schematic of an adapter assembly mated with a male connector of a vehicle-mounted opto-electronic hybrid connector according to an embodiment of the present disclosure.
FIG. 26 is a schematic of a central shaft assembly of a vehicle-mounted opto-electronic hybrid connector according to an embodiment of the present disclosure.
FIG. 26a is a structural schematic of a central shaft assembly of a vehicle-mounted opto-electronic hybrid connector according to an embodiment of the present disclosure.
FIG. 26b is a schematic of a male conductive terminal of a vehicle-mounted opto-electronic hybrid connector according to an embodiment of the present disclosure.
FIG. 26c is a schematic of a fixing protrusion of a vehicle-mounted opto-electronic hybrid connector according to an embodiment of the present disclosure.
FIG. 26d is a schematic of an anti-pull protrusion cooperating with a strain relief boot of a vehicle-mounted opto-electronic hybrid connector according to an embodiment of the present disclosure.
FIG. 27 is a schematic of a receiving cavity of a vehicle-mounted opto-electronic hybrid connector according to an embodiment of the present disclosure.

### Detailed Description of Embodiments

The objects, technical solutions, and advantages of the present disclosure will be described in further detail with reference to the accompanying drawings and embodiments. It is understood that the described embodiments are illustrative and not limiting.

In the description of the present disclosure, terms such as "inner", "outer", "longitudinal", "transverse", "upper", "lower", "top", and "bottom" refer to orientations or positional relationships shown in the accompanying drawings. These terms are used merely for convenience of description and do not require the invention to be constructed or operated in any particular orientation. Accordingly, they shall not be construed as limiting the invention.

Terms "first", "second", and the like are used for descriptive purposes only and are not intended to indicate or imply relative importance or to implicitly specify the number of indicated technical features. Thus, features defined as "first", "second", etc., may explicitly or implicitly include one or more such features. In the description of the present disclosure, "plurality" means two or more unless otherwise specified.

In the present disclosure, unless otherwise expressly specified or limited, the term "connected" is to be interpreted broadly. For example, "connected" may mean fixedly connected, detachably connected, or integral; directly connected, or indirectly connected through an intermediate medium. Additionally, the term "coupled" may refer to an electrical connection enabling signal transmission.

Additionally, the technical features described in the various embodiments of the present disclosure may be combined with one another, provided that no conflict arises between such features.

### Embodiment 1

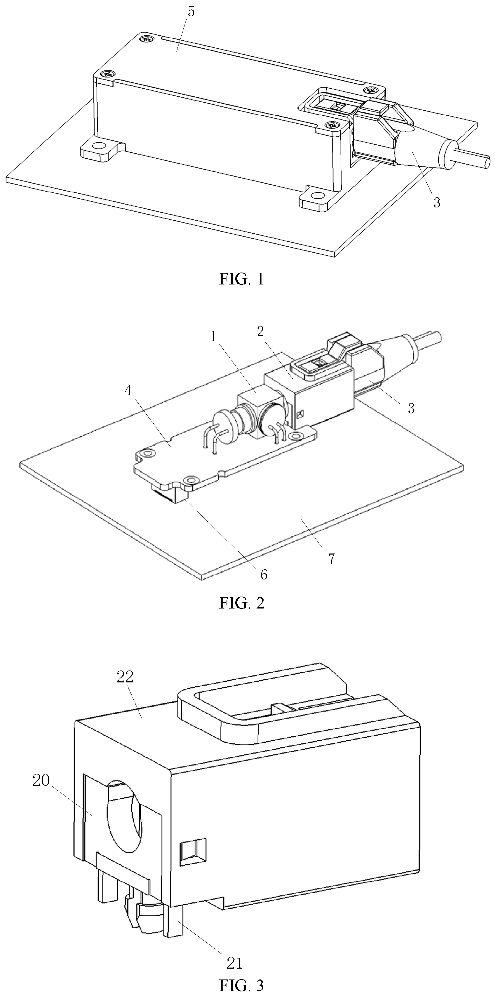

The present disclosure provides a vehicle-mounted opto-electronic hybrid connector, as shown in FIGS. 1-9, comprising a BOSA device 1, an adapter assembly 2, a male connector 3, and a PCB daughter board 4. The connector further comprises a packaging shell 5 enclosing the BOSA device 1 and the adapter assembly 2.

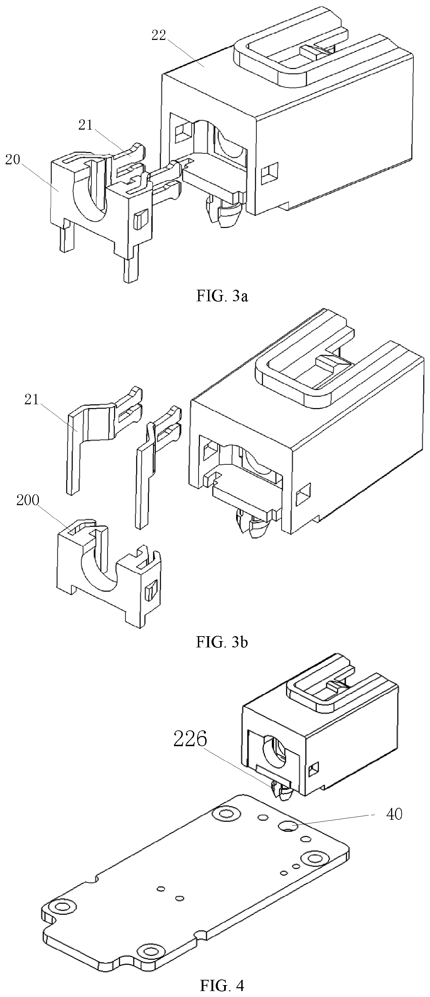

As shown in FIGS. 3 and 3a, the adapter assembly 2 includes an adapter unit 20, female conductive terminals 21, and an adapter housing 22. The BOSA device 1 is snap-fitted to and constrained by the adapter unit 20. The adapter housing 22 is fixedly coupled to the PCB daughter board 4. As shown in FIG. 3b, the adapter unit 20 defines first receiving slots 200, and the female conductive terminals 21 are disposed within the first receiving slots 200. The adapter unit 20 is mounted on one end face of the adapter housing 22.

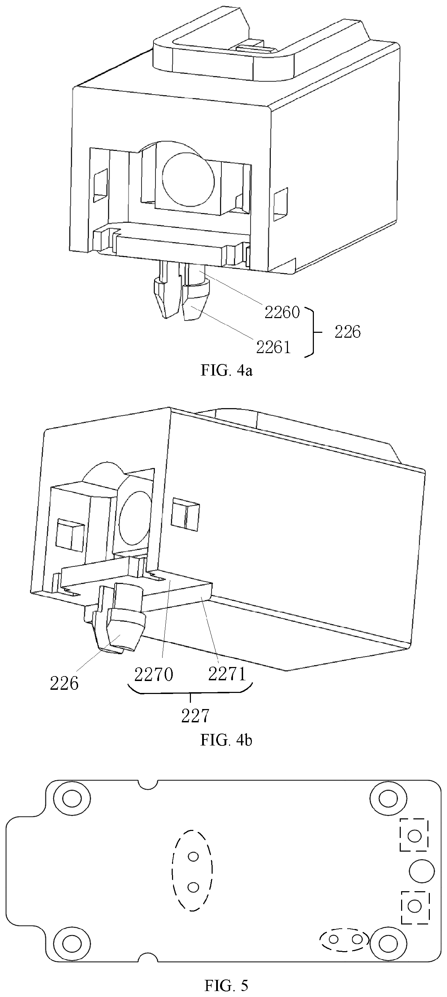

In one embodiment, as shown in FIG. 4, the adapter housing 22 comprises fixing protrusions 226, and the PCB daughter board 4 defines a corresponding third through-hole 40. The fixing protrusions 226 are snap-fitted into the third through-hole 40. As shown in FIG. 4a, two fixing protrusions 226 are spaced apart. Each protrusion 226 includes an upper fixing post 2260 with a height matching the PCB daughter board 4 thickness (0-1 mm tolerance) and a lower bow-shaped protrusion 2261 wider than the post 2260. The maximum width of the protrusion 2261 is equal to or slightly less than the diameter of the third through-hole 40. When the post 2260 is seated in the through-hole 40, a top surface of the protrusion 2261 abuts the PCB underside. For disassembly, the bow-shaped protrusions 2261 are squeezed to disengage the fixing protrusions 226.

To prevent rotation of the adapter housing 22 relative to the PCB daughter board 4, as shown in FIG. 4b, the adapter housing 22 abuts a top surface and a side surface of the PCB daughter board 4. Stated differently, the adapter housing 22 defines an L-shaped retention notch 227 having a second end surface 2270 and a third end surface 2271. The fixing protrusions 226 are disposed on the second end surface 2270. When engaged, the top surface of the PCB abuts the second end surface 2270, and the side surface of the PCB abuts the third end surface 2271, blocking rotation of the adapter housing 22 relative to the PCB daughter board 4.

The BOSA device 1 and female conductive terminals 21 are each electrically connected to the PCB daughter board 4. The BOSA-to-PCB connection region (ellipse, FIG. 5) and the female terminal-to-PCB connection region (square, FIG. 5) are interconnected via PCB traces. Specifically, the BOSA device 1 and the female conductive terminals 21 are electrically connected to the PCB daughter board 4 by soldering.

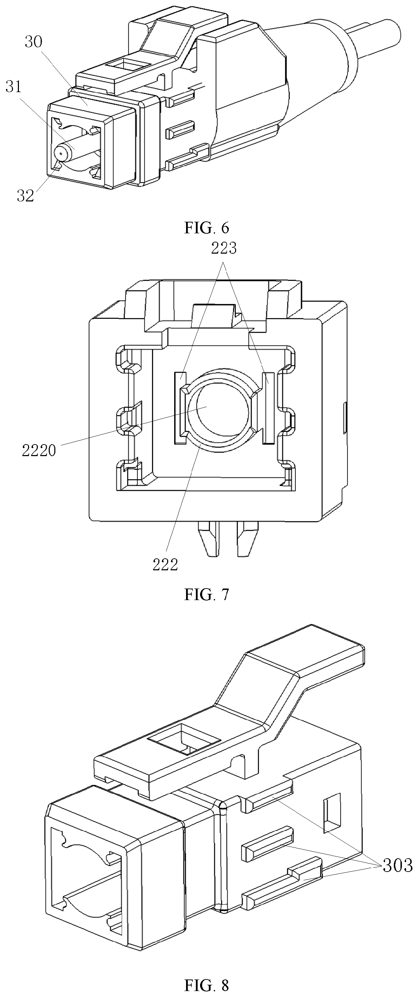

As shown in FIG. 6, the male connector 3 includes a connector housing 30, a male ferrule assembly 31, and male conductive terminals 32. The connector housing 30 mates with the adapter housing 22, enabling the male ferrule assembly 31 to couple with the ferrule assembly of the BOSA device 1 and the male conductive terminals 32 to abut the female conductive terminals 21. During coupling of the ferrule assembly of the BOSA device 1 with the male ferrule assembly 31, extremely high coupling precision is required. To ensure coupling precision, as shown in FIG. 7, the adapter housing 22 is provided with a coupling unit 222 arranged axially therein. A second through hole 2220 is defined at the central axis of the coupling unit 222, and the second through hole 2220 is configured to allow coupling between the ferrule assembly of the BOSA device 1 and the male ferrule assembly 31. Within the coupling unit 222, first channels 223 for receiving the female conductive terminals 21 are respectively disposed on both sides thereof. The female conductive terminals 21 extend from the first channels 223 to abut against the male conductive terminals 32.

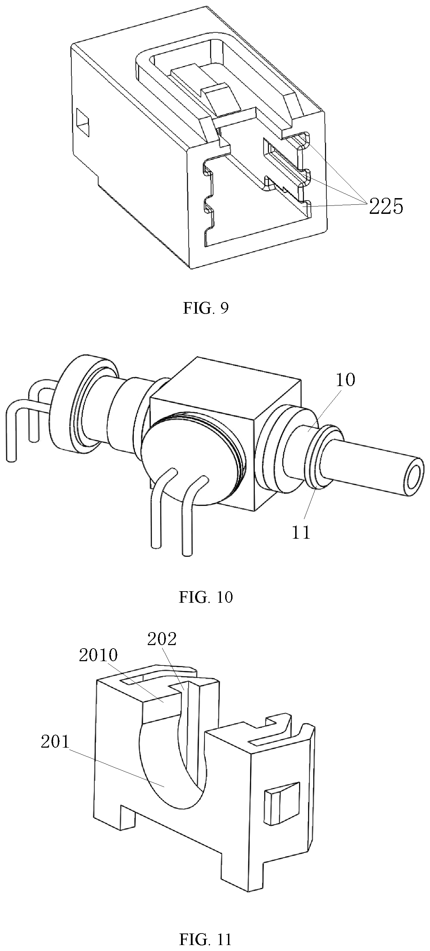

Specifically, to enable the male connector 3 and the adapter assembly 2 to each have multiple specifications, and to ensure that only mutually compatible specifications can be mated while preventing mating between incompatible specifications, at least one anti-misinsertion protrusion 303 is disposed on both sides of the connector housing 30, as shown in FIG. 8. Correspondingly, one or more anti-misinsertion recesses 225 adapted to the anti-misinsertion protrusions 303 are formed on the inner wall of the adapter housing 22, as shown in FIG. 9. When multiple specifications of the male connector 3 and the adapter assembly 2 are provided, the positions and quantities of the corresponding anti-misinsertion protrusions 303 and anti-misinsertion recesses 225 ensure that male connectors 3 and adapter assemblies 2 of different configurations cannot be mated.

As shown in FIG. 2, the connector further includes a vehicle connector 6 and a PCB mother board 7. The vehicle-mounted connector 6 electrically couples the PCB daughter board 4 and the PCB mother board 7. In particular, the vehicle-mounted connector 6 may be of model DF40TC, configured to transmit electrical signals between the PCB daughter board 4 and the PCB motherboard 7.

An embodiment of the present disclosure provides a vehicle-mounted opto-electronic hybrid connector. By an adapter assembly 2 provided therein, the BOSA device 1 is pre-fixed to the adapter unit 20 of the adapter assembly 2, and the BOSA device 1 and the adapter assembly 2 are then jointly secured to the PCB daughter board 4. To connect the BOSA device 1 with the male connector 3, the male connector 3 need only be aligned and inserted into the adapter housing 22 to achieve coupling with the BOSA device 1, thereby effectively improving the mating accuracy between the BOSA device 1 and the male connector 3.

In a preferred embodiment, anti-misinsertion protrusions 303 on the connector housing 30 and anti-misinsertion recesses 225 on the adapter housing 22 are positioned and dimensioned such that the BOSA devices 1 and male connectors 3 of different configurations cannot be mated. Furthermore, second locking recesses 3000 formed on the support bars 300 of the connector housing 30 and second locking tabs 2240 provided on the adapter housing 22 ensure stable mating between the BOSA device 1 and the male connector 3, effectively enhancing the operational reliability of the opto-electronic hybrid connector.

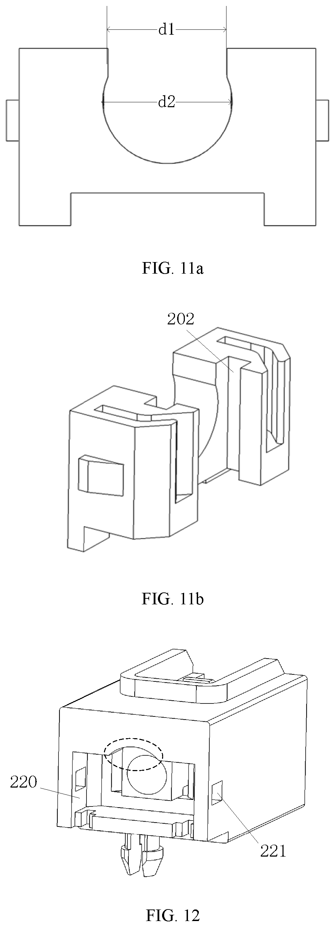

As mentioned above, the BOSA device 1 is secured together with the adapter assembly 2 to the PCB daughter board 4. The BOSA device 1 is snap-fitted onto the adapter unit 20 and restrained thereby. As shown in FIGS. 10 and 11, the front end of the BOSA device 1 defines a cylindrical interface 10, and the adapter unit 20 is formed with a cylindrical recess 201 complementary to the cylindrical interface 10, into which the cylindrical interface 10 is snap-fitted. To prevent the cylindrical interface 10 from dislodging from the cylindrical recess 201 due to environmental vibration, a first notch 2010 is provided above the cylindrical recess 201. The first notch 2010 has two vertical, parallel side surfaces. As shown in FIG. 11a, the distance d1 between the two side surfaces is less than the diameter d2 of the cylindrical recess 201, thereby restraining the cylindrical interface 10 within the cylindrical recess 201. After restraining the BOSA device 1 in the vertical direction, the present embodiment adopts the following arrangement for axial restraint of the BOSA device 1. With reference to FIGS. 10, 11, and 11b, the front end of the cylindrical interface 10 is provided with an annular protrusion 11, and the adapter unit 20 defines a first retention recess 202. When the cylindrical interface 10 is snap-fitted into the cylindrical recess 201, the annular protrusion 11 is retained by the first retention recess 202. In a preferred embodiment, considering both ease of assembly and operational stability, the cylindrical recess 201 is configured as an axially half-open recess for supporting and positioning the BOSA device 1. The first retention recess 202 is disposed on both sides of the cylindrical recess 201 in the form of a rectangular strip, which restrains the edge of the annular protrusion 11 and prevents axial displacement of the BOSA device 1. As can be seen in FIG. 12, a notch is formed above the adapter interface 220 to provide arcuate relief for the portion of the annular protrusion 11 extending beyond the first retention recess 202 (shown in the dashed box in FIG. 12). This ensures that when the adapter unit 20 is fully snap-fitted into the adapter housing 22, the portion of the annular protrusion 11 extending beyond the first retention recess 202 abuts against the arcuate retaining structure.

In an alternative arrangement, the first retention recess 202 may be configured as an axially half-open annular recess complementary to the annular protrusion 11. However, a height difference exists between the cylindrical interface 10 and the annular protrusion 11. Arcuate features are also relatively complex to manufacture, and machining errors may occur in the height difference between the cylindrical recess 201 and the first retention recess 202. This may result in ineffective securing of the BOSA device 1 or errors during coupling between the BOSA device 1 and the male connector 3. Accordingly, forming the first retention recess 202 as a rectangular strip better satisfies stability requirements.

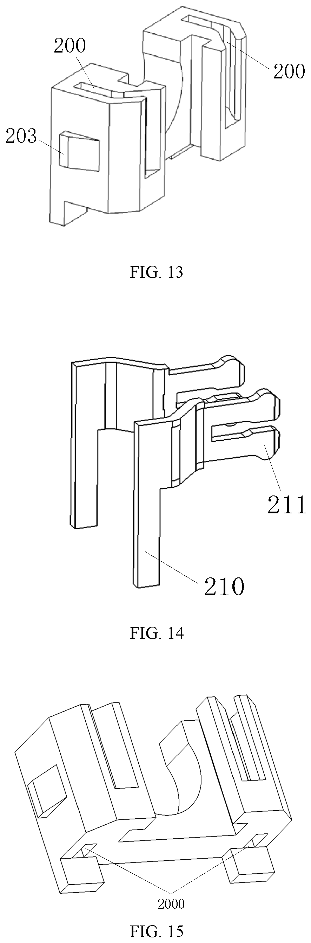

The female conductive terminals 21 are mounted and positioned within the adapter unit 20, which is a mounting and positioning manner of the female conductive terminals 21 provided by the present embodiment. As shown in FIGS. 13, 14, and 15, the first receiving slots 200 are disposed on both sides of the adapter unit 20, and the female conductive terminals 21 are received within the first receiving slots 200. A welding electrode 210 extends from the lower end of each female conductive terminal 21. The bottom of each first receiving slot 200 defines a first through-hole 2000 complementary to the welding electrode 210. The welding electrode 210 passes through the first through-hole 2000 for electrical connection to the PCB daughter board 4. In one embodiment, the first receiving slot 200 is half-open, i.e., the top surface and the front surface of the adapter unit 20 are open (the direction in which the adapter unit 20 couples with the adapter housing 22 is defined as forward), to accommodate a portion of the main body of the female conductive terminal 21. The dimensional tolerance between the first through-hole 2000 and the welding electrode 210 is 0 mm to 0.1 mm, ensuring stable retention of the welding electrode 210 and facilitating soldering to the PCB daughter board 4.

The main body of each female conductive terminal 21 is Z-shaped with a bend angle of 120° to 150°. The first receiving slot 200 is L-shaped with a bend angle matching that of the female conductive terminal 21. The portion inserted into the first receiving slot 200 is an upper horizontal section; the exposed portion is a lower horizontal section. The connecting portion is a vertical section, which absorbs impact forces generated when the female conductive terminal 21 mates with the male conductive terminal 32 during mating of the male connector 3 and the adapter assembly 2.

In a specific implementation, the number of female conductive terminals 21 is two, each embedded and coupled with the first receiving slot 200 of a respective adapter unit 20. Each female conductive terminal 21 is formed in a Z-shape, and the contour extension direction of the Z-shape is consistent with the extension direction of the first receiving slot 200 from the left-side bottom to the right-side opening as shown in FIG. 13. Correspondingly, the cross-section of the opening of the first receiving slot 200 is L-shaped to match the upper half of the Z-shape. In consideration of electrical performance, ease of assembly, securing effect, and operational stability, the Z-shaped and L-shaped corners are typically formed as obtuse angles, for example, between 120° and 150°, and 135° in the illustrated embodiment.

With reference to the first retention recess 202 described above and as shown in FIG. 11, the first retention recess 202 is disposed at the corner region of the L-shaped structure of the first receiving slot 200. This arrangement accommodates elastic deformation of the terminal mating head 211 of the female conductive terminal 21 when urged during mating with the male conductive terminal 32. When the annular protrusion 11 is snap-fitted into the first retention recess 202, it applies a thrust force to the inner tapered structure of the adapter unit 20 at the first receiving slot 200. A counteracting force is generated via the annular protrusion 11, ensuring stability during the entire mating process of the female conductive terminal 21.

As shown in FIG. 14, the terminal mating head 211 of the female conductive terminal 21 is formed as a double-arm structure with protrusions at two contact points. The gap between the two arms accommodates deformation of the terminal mating head 211 during mating with the male conductive terminal 32.

After inserting the female conductive terminals 21 into the first receiving slots 200 and snap-fitting the BOSA device 1 into the cylindrical recess 201, the BOSA device 1 and the adapter unit 20 are fixedly connected to the adapter housing 22. As shown in FIGS. 12 and 13, one end face of the adapter housing 22 defines an adapter interface 220 that receives the adapter unit 20. First locking tabs 203 are disposed on both sides of the adapter unit 20, and first locking recesses 221 are defined on both sides of the adapter interface 220. The first locking tabs 203 engage the first locking recesses 221 to secure the adapter unit 20 within the adapter interface 220.

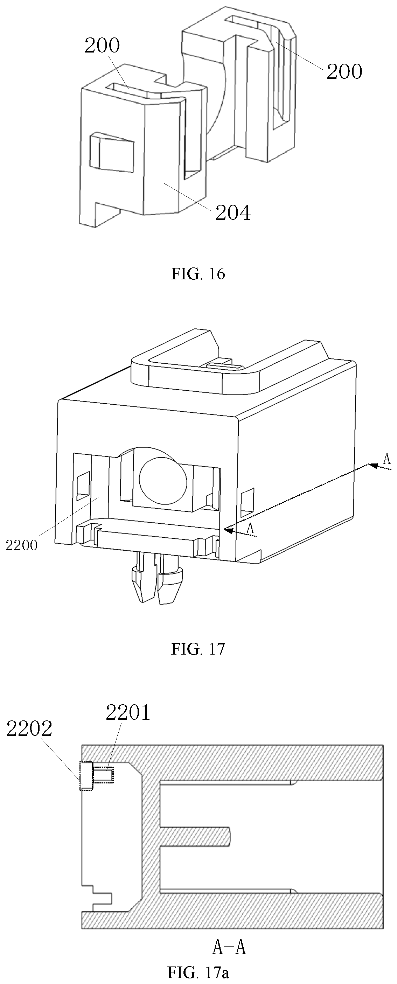

In a preferred embodiment, in conjunction with the first retention recess 202 described above, to further secure and restrain the female conductive terminal 21, the outer surface of the adapter unit 20 at the first receiving slot 200 is defined as a first inclined surface 204, as shown in FIG. 16. The inner side of the adapter interface 220 is provided with a second inclined surface 2200 complementary to the first inclined surface 204, as shown in FIG. 17. The lateral opening of the first receiving slot 200 is wider than the female conductive terminal 21. When the adapter unit 20 is locked to the adapter interface 220, the second inclined surface 2200 abuts the first inclined surface 204. The opening of the first receiving slot 200 is slightly wider than the female conductive terminal 21 to facilitate insertion of the female conductive terminal 21. Once the first locking tabs 203 and first locking recesses 221 are engaged, the second inclined surface 2200 pushes the first inclined surface 204 inward, pressing the female conductive terminal 21 in the first receiving slot 200 and securely locking the female conductive terminal 21 within the first receiving slot 200.

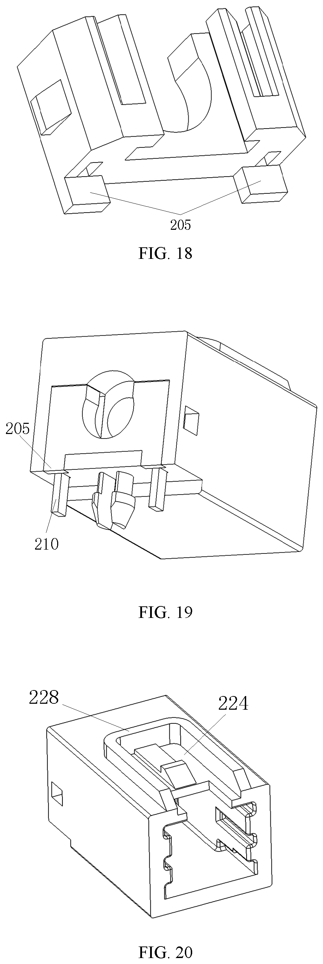

Since the female conductive terminal 21 is electrically connected to the PCB daughter board 4, its welding electrode 210 must extend through the adapter housing 22 to contact the PCB daughter board 4. As shown in FIG. 17a, the bottom of the adapter interface 220 defines a second notch 2201 for the welding electrode 210 of the female conductive terminal 21 extending through and sized to receive the welding electrode 210. Since the welding electrode 210 is elongated, relying solely on the second notch 2201 for accommodation without securing the welding electrode 210 may cause it to become detached during soldering or in a vibrating environment such as a vehicle. Accordingly, as shown in FIGS. 17a and 18, the bottom of the adapter unit 20 includes a sealing protrusion 205. A first end surface 2050 of the sealing protrusion 205 communicates with a second end surface 2270 of the first through-hole 2000. The bottom of the adapter interface 220 defines a third notch 2202 complementary to the sealing protrusion 205 and communicating with the second notch 2201. When the adapter unit 20 is locked to the adapter interface 220, the welding electrode 210 is received in the second notch 2201, and the sealing protrusion 205 is received in the third notch 2202 to secure the welding electrode 210. As shown in FIG. 19, the sealing protrusion 205 closes the second notch 2201 and retains the welding electrode 210 in the second notch 2201, maintaining stability of the welding electrode 210 under vibration and enhancing connector reliability.

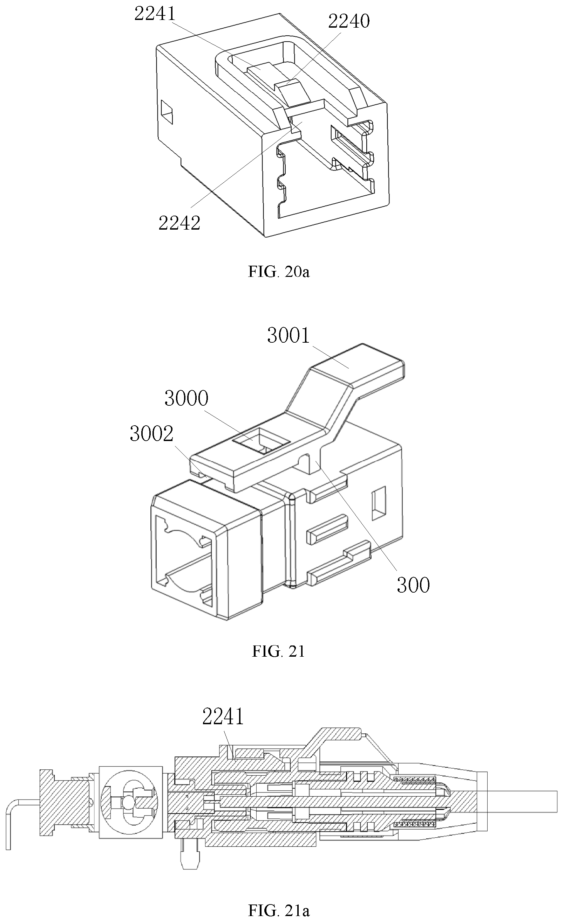

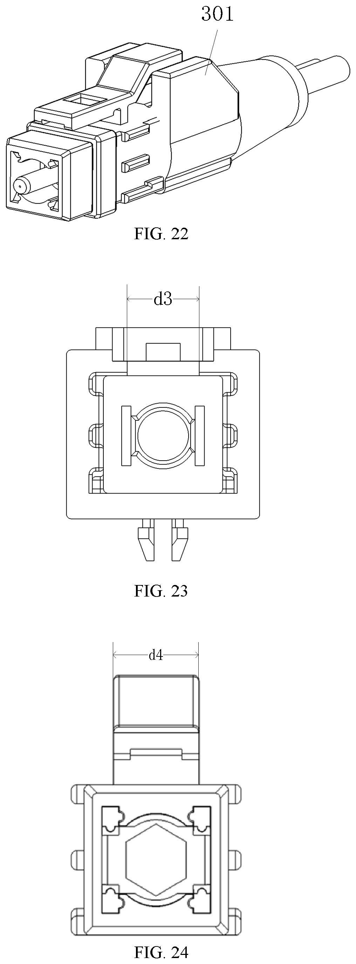

Regarding the mating between the adapter assembly 2 and the male connector 3, an interlocking structure is provided between the adapter housing 22 and the connector housing 30 in one embodiment. As shown in FIGS. 20 and 20a, near the mating end of the adapter housing 22 with the male connector 3, a first slot 224 of a predetermined axial length is defined on the upper surface of the adapter housing 22, with a second locking tab 2240 disposed thereon. As shown in FIG. 21, a support bar 300 on the upper surface of the connector housing 30 supports a crossbar having a second locking recess 3000 and a pressing portion 3001, the second locking recess 3000 and the pressing portion 3001 being on opposite sides of the support bar 300. After mating of the adapter assembly 2 and the male connector 3, the second locking tab 2240 engages the second locking recess 3000, and the first slot 224 receives a portion of the crossbar above the connector housing 30. As shown in FIG. 22, a guard structure 301 of at least the height of the pressing portion 3001 in the locked state is disposed at a portion where the connector housing 30 receives the crossbar to prevent accidental actuation.

The vehicle-mounted opto-electronic hybrid connector of the present disclosure is typically used in vibration-prone environments such as vehicle cabins. Therefore, shock-resistant structure design is a key consideration. The use of only the second locking tab 2240 and second locking recess 3000 fails to achieve the optimal solution of the present disclosure. Especially given the connector's compact size, if the second locking recess 3000 is too close to the end of the crossbar and adjacent to the support bar 300, a large moment imbalance will exist between the pressing portion 3001 and the second locking recess 3000 relative to the support bar 300, introducing new instability under vibration. To address this issue, the present disclosure provides a preferred extended embodiment. As shown in FIG. 20a, a boss-shaped limiting portion 2241 is disposed axially outward from the second locking tab 2240 on the first slot 224. Correspondingly, an elongated recess 3002 is formed on the crossbar of the connector housing 30 that defines the second locking recess 3000. As shown in FIG. 21a, when the second locking tab 2240 locks the second locking recess 3000, the elongated recess 3002 fits over the limiting portion 2241, covering the second locking recess 3000. This arrangement not only balances the moments of the crossbar having the second locking recess 3000 and the crossbar having the pressing portion 3001 relative to the support bar 300, but more importantly, when the second locking tab 2240 engages the second locking recess 3000, the elongated recess 3002 fits over the limiting portion 2241, so that the locked state between the second locking tab 2240 and the second locking recess 3000 achieves improved stability under the auxiliary constraint of the elongated recess 3002 and the limiting portion 2241. Even if external vibration bypasses the barrier structure 228 in FIG. 20 and impacts the crossbar within the first slot 224, the fit between the elongated recess 3002 and the second limiting portion 2241 effectively absorbs the impact without compromising locking stability.

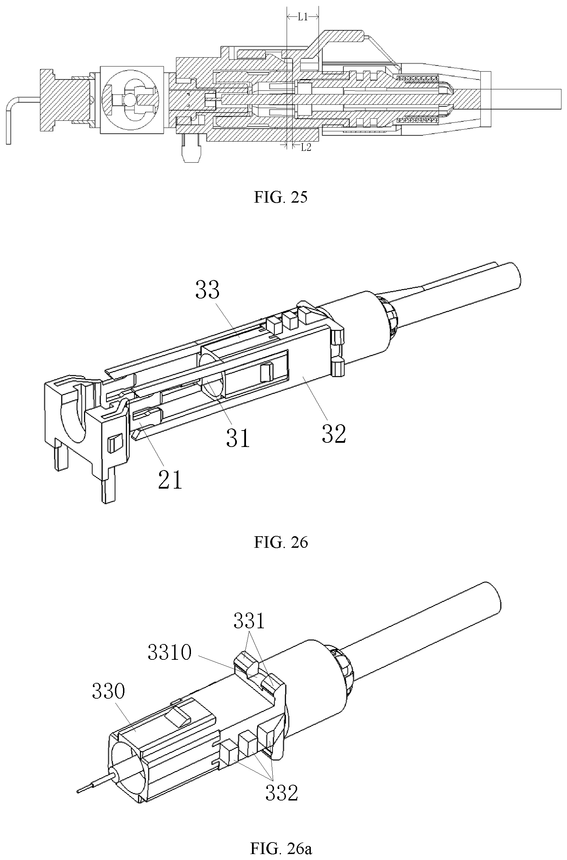

In practice, the connector is much smaller than visually depicted in the drawings. To optimize the overall length after mating, as shown in FIGS. 20a, 23, and 24, the first slot 224 defines a fourth notch 2242 proximate to the mating end of the adapter housing 22. The width d3 of the fourth notch 2242 is dimensioned to receive the width d4 of the support bar 300, and the length of the fourth notch 2242 is configured to accommodate the axial distance the support bar 300 advances into the mating end face of the adapter housing 22 during full engagement between the connector housing 30 and the adapter housing 22. FIG. 25 is a cross-sectional view of the male connector 3 fully mated with the adapter assembly 2. The length L1 of the fourth notch 2242 includes an extra margin L2 beyond the insertion depth of the support bar 300. This margin provides sufficient compliant deformation space for the support bar 300 during locking and unlocking operations.

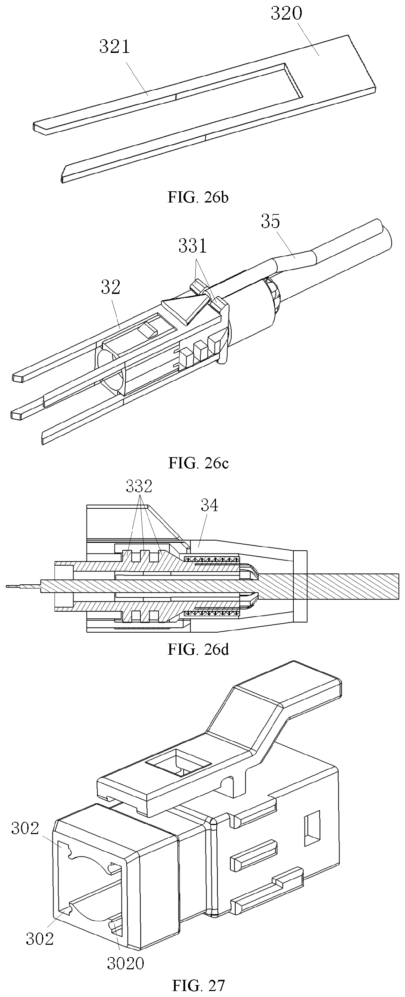

As shown in FIGS. 26, 26a and 26b, the male connector 3 further includes a central shaft assembly 33. The male ferrule assembly 31 is disposed at the central axis of the central shaft assembly 33, and rectangular bosses 330 are symmetrically formed on the top and bottom horizontal surfaces of the central shaft assembly 33. The male conductive terminals 32 are Π-shaped terminals each having a top beam 320 and two vertical posts 321. Fixing protrusions 331 are arranged on the top and bottom horizontal surfaces of the central shaft assembly 33 adjacent to the top beam 320 of the male conductive terminal 32 to restrain the top beam 320. The portion of the top beam 320 extending beyond the end face of the central shaft assembly 33 is received inside the connector housing 30. As illustrated in FIG. 27, the top beam 320 of the male conductive terminal 32 is fitted into a receiving cavity 302 formed within the connector housing 30. Two outer side walls of the receiving cavity 302 are defined by the corner profiles of the connector housing 30. The female conductive terminal 21 is positioned between the two top beams 320 of the male conductive terminal 32. Protrusions on the outer side of the terminal mating head 211 of the female conductive terminal 21 abut against the inner walls of the top beams 320 to establish electrical conduction.

In a preferred embodiment, a semicircular groove 3020 extending along the length of the receiving cavity 302 is formed on the inner wall thereof. The semicircular groove 3020 serves two purposes: it acts as an air duct to facilitate heat dissipation from the vertical posts 321 of the male conductive terminal 32, and reduces friction during insertion of the vertical posts 321, thereby simplifying assembly.

To achieve improved dust resistance in this embodiment, the rear sleeve 34 arranged at the tail of the male connector 3 is preferably formed by casting. This method effectively fills gaps between components during molding for enhanced dustproof performance. The aforementioned fixing protrusions 331 can be adapted for use with this cast rear sleeve structure. As further illustrated in FIGS. 26a and 26d, one or more anti-pull protrusions 332 are symmetrically disposed on the left and right sides of the central shaft assembly 33. These anti-pull protrusions 332 cooperate with the fixing protrusions 331 to lock the cast first rear sleeve 34 against pulling forces in all vertical and horizontal directions. Accordingly, when the rear sleeve 34 is bent or pulled in any direction, the fixing protrusions 331 and/or anti-pull protrusions 332 restrain movement and prevent the rear sleeve 34 from slipping out of its assembled position.

As shown in FIGS. 26a and 26c, a passage 3310 is defined through each fixing protrusion 331 for routing a wire 35. The height of each fixing protrusion 331 is substantially equal to the outer surface height of the wire 35 passing through the passage 3310, and the width of the passage 3310 differs from the diameter of the wire 35 by less than a predetermined value. After the wire terminal is soldered to the top beam 320, the soldered joint and the connection between the wire terminal and the wire sheath of the wire 35 provide anti-pull effects equivalent to those of the anti-pull protrusions 332. Together with the fixing protrusions 331, they form an effect equivalent to the multipoint anti-pull protrusions 332.

The foregoing descriptions are merely preferred embodiments of the present invention and are not intended to limit the invention. Any modifications, equivalent substitutions and improvements made within the spirit and principles of the present invention shall fall within the protection scope thereof.

## Claims

1. A vehicle-mounted opto-electronic hybrid connector, **characterized in** comprising:
a BOSA device (1), an adapter assembly (2), a male connector (3), and a PCB daughter board (4),
wherein the adapter assembly (2) comprises an adapter unit (20), female conductive terminals (21), and an adapter housing (22), wherein the BOSA device (1) is snap-fitted to and constrained by the adapter unit (20), the adapter unit (20) is mounted on an end face of the adapter housing (22), the adapter housing (22) is fixedly coupled to the PCB daughter board (4), the adapter unit (20) defines first receiving slots (200), the female conductive terminals (21) are received in the first receiving slots (200), and the BOSA device (1) and the female conductive terminals (21) are each electrically connected to the PCB daughter board (4); and
the male connector (3) comprises a connector housing (30), a male ferrule assembly (31), and male conductive terminals (32), wherein the connector housing (30) mates with the adapter housing (22), thereby coupling the male ferrule assembly (31) to a ferrule assembly of the BOSA device (1) and electrically connecting the male conductive terminals (32) to the female conductive terminals (21).

2. The vehicle-mounted opto-electronic hybrid connector of claim 1, wherein a front end of the BOSA device (1) is provided with a cylindrical interface (10), the adapter unit (20) is formed with a cylindrical recess (201) matching the cylindrical interface (10), and the cylindrical interface (10) is snap-fitted into the cylindrical recess (201);
a first notch (2010) is arranged above the cylindrical recess (201), having two side surfaces which are vertical and parallel to each other, and a distance between the two side surfaces is smaller than a diameter of the cylindrical recess (201), so as to restrain the cylindrical interface (10) within the cylindrical recess (201).

3. The vehicle-mounted opto-electronic hybrid connector of claim 2, wherein an annular protrusion (11) is disposed at a front end of the cylindrical interface (10); the adapter unit (20) is provided with a first retention recess (202), and when the cylindrical interface (10) is snap-fitted into the cylindrical recess (201), the annular protrusion (11) is restrained by the first retention recess (202).

4. The vehicle-mounted opto-electronic hybrid connector of claim 1, wherein the first receiving slots (200) are respectively disposed on two sides of the adapter unit (20), and the female conductive terminals (21) are correspondingly received in the first receiving slots (200); a welding electrode (210) extends downward from a lower end of each female conductive terminal (21); a bottom of each first receiving slot (200) is provided with a first through hole (2000) conforming to a shape of the welding electrode (210), and the welding electrode (210) penetrates through the first through hole (2000) to be electrically connected to the PCB daughter board (4).

5. The vehicle-mounted opto-electronic hybrid connector of claim 4, wherein a main body of each female conductive terminal (21) is Z-shaped with a 120°-150° bend angle, and the first receiving slot (200) is L-shaped with a bend angle identical to that of the female conductive terminal (21).

6. The vehicle-mounted opto-electronic hybrid connector of claim 1, wherein an end face of the adapter housing (22) is provided with an adapter interface (220), and the adapter unit (20) is received inside the adapter interface (220); first locking tabs (203) are respectively arranged on two side surfaces of the adapter unit (20), and first locking recesses (221) are respectively formed on two sides of the adapter interface (220); and wherein the first locking tabs (203) are locked to the first locking recesses (221) to fix the adapter unit (20) inside the adapter interface (220).

7. The vehicle-mounted opto-electronic hybrid connector of claim 6, wherein an outer surface of the adapter unit (20) adjacent to the first receiving slot (200) is configured as a first inclined surface (204), a second inclined surface (2200) matching the first inclined surface (204) is formed on an inner side of the adapter interface (220); a width of a lateral opening of the first receiving slot (200) is greater than that of the female conductive terminal (21), and when the adapter unit (20) is locked with the adapter interface (220), the second inclined surface (2200) abuts against the first inclined surface (204).

8. The vehicle-mounted opto-electronic hybrid connector of claim 6, wherein a second notch (2201) for the welding electrode (210) of the female conductive terminal (21) to pass through is formed on a bottom surface of the adapter interface (220), and a length and width of the second notch (2201) match those of the welding electrode (210);
a sealing protrusion (205) is disposed at a bottom of the adapter unit (20), a first end surface (2050) of the sealing protrusion (205) communicates with a second end surface (2270) of the first through hole (2000) of the first receiving slot (200), a third notch (2202) matching the sealing protrusion (205) is formed on the bottom surface of the adapter interface (220) and is in communication with the second notch (2201), wherein when the adapter unit (20) is locked to the adapter interface (220), the welding electrode (210) is received in the second notch (2201), and the sealing protrusion (205) is received in the third notch (2202) to fix the welding electrode (210).

9. The vehicle-mounted opto-electronic hybrid connector of claim 1, wherein a coupling unit (222) is axially arranged inside the adapter housing (22), and a second through hole (2220) is formed at a central axis of the coupling unit (222) and is configured for coupling a ferrule assembly of the BOSA device (1) with the male ferrule assembly (31).

10. The vehicle-mounted opto-electronic hybrid connector of claim 9, wherein first through grooves (223) for receiving the female conductive terminals (21) are respectively arranged on two sides of the coupling unit (222).

11. The vehicle-mounted opto-electronic hybrid connector of claim 1, wherein near a mating end of the adapter housing (22) and the male connector (3), a first slot (224) with a preset axial length is formed on an upper surface of the adapter housing (22) and axially arranged, and a second locking tab (2240) is disposed on the first slot (224); a support bar (300) is arranged on an upper surface of the connector housing (30), and the support bar (300) is connected to a crossbar provided with a second locking recess (3000) and a pressing portion (3001), wherein the second locking recess (3000) and the pressing portion (3001) are disposed on two opposite sides of the support bar (300);
after the adapter assembly (2) is mated with the male connector (3), the second locking tab (2240) engages with the second locking recess (3000) to complete locking, and the first slot (224) receives a part of the crossbar above the connector housing (300); wherein a guard structure (301) for preventing accidental contact is arranged at a region of the connector housing (300) where the crossbar is accommodated, and the height of the guard structure (301) is not less than that of the pressing portion (3001) in a locked state.

12. The vehicle-mounted opto-electronic hybrid connector of claim 11, wherein a boss-shaped limiting portion (2241) is further arranged in an axial extension direction of the second locking tab (2240) on the first slot (224), and correspondingly, an elongated recess (3002) is formed on the crossbar of the connector housing (300) where the second locking recess (3000) is located, wherein when the second locking tab (2240) is locked with the second locking recess (3000), the elongated recess (3002) fits over the limiting portion (2241).

13. The vehicle-mounted opto-electronic hybrid connector of claim 12, wherein a fourth notch (2242) is formed at a mating end of the first slot (224) adjacent to the adapter housing (22), a width of the fourth notch (2242) is configured to just accommodate a width of the support bar (300), and a length of the fourth notch (2242) satisfies an axial insertion distance of the support bar (300) into a mating end face of the adapter housing (22) during engagement between the connector housing (30) and the adapter housing (22).

14. The vehicle-mounted opto-electronic hybrid connector of claim 1, wherein the male connector (3) further comprises a central shaft assembly (33), at a central axis of which the male ferrule assembly (31) is fixed, and rectangular bosses (330) are symmetrically formed on top and bottom horizontal surfaces of the central shaft assembly (33); and the male conductive terminal (32) is a Π-shaped terminal comprising a top beam (320) and two vertical posts (321), wherein fixing protrusions (331) are disposed on top and bottom horizontal surfaces of the central shaft assembly (33) adjacent to the top beam (320) to restrict a position of the top beam (320).

15. The vehicle-mounted opto-electronic hybrid connector of claim 14, wherein one or more anti-pull protrusions (332) are symmetrically arranged on left and right sides of the central shaft assembly (33), and the one or more anti-pull protrusions (332) cooperate with the fixing protrusions (331) to act on a cast rear sleeve (34), so as to lock the rear sleeve (34) against pulling forces in vertical and horizontal directions.

16. The vehicle-mounted opto-electronic hybrid connector of claim 14, wherein a passage (3310) is formed through each fixing protrusion (331) for a wire (35) to pass through, wherein a height of each fixing protrusion (331) is equal to a surface height of the wire (35) extending through the passage (3310), and a difference between a width of the passage (3310) and a diameter of the wire (35) is less than a preset value.

17. The vehicle-mounted opto-electronic hybrid connector of claim 14, wherein the top beam (320) of the male conductive terminal (32) is embedded inside the connector housing (30), a receiving cavity (302) for accommodating the top beam (320) is formed within the connector housing (30), and two outer side walls of the receiving cavity (302) are defined by corner profiles of the connector housing (30), wherein a semicircular groove (3020) extending along a length direction of the receiving cavity (302) is formed on an inner wall thereof.

18. The vehicle-mounted opto-electronic hybrid connector of claim 1, wherein a fixing protrusion (226) is arranged on a bottom of the adapter housing (22), and a third through hole (40) corresponding to the fixing protrusion (226) is formed on the PCB daughter board (4), wherein the fixing protrusions (226) are snap-fitted and fixed into the third through holes (40).

19. The vehicle-mounted opto-electronic hybrid connector of claim 18, wherein there are two fixing protrusions (226), an upper section of each fixing protrusion (226) is provided with a fixing post (2260) with a height matches a thickness of the PCB daughter board (4), and a height difference between the fixing post (2260) and the PCB daughter board (4) ranges from 0 mm to 1 mm; a bow-shaped protrusion (2261) with a larger diameter than that of the fixing post (2260) is arranged at a lower section of each fixing protrusion (226), and a maximum width of the bow-shaped protrusion (2261) is equal to or smaller than a diameter of the third through hole (40).

20. The vehicle-mounted opto-electronic hybrid connector of claim 18, wherein an L-shaped limiting notch (227) is formed on the bottom of the adapter housing (22) and comprises a second end surface (2270), and the fixing protrusions (226) are disposed on the second end surface (2270).

21. The vehicle-mounted opto-electronic hybrid connector of any one of claims 1-20, wherein at least one anti-misinsertion protrusion (303) is disposed on each of two sides of the connector housing (30), and one or more anti-misinsertion recesses (225) matched with the anti-misinsertion protrusions (303) are formed on an inner wall of the adapter housing (22), wherein when the male connectors (3) and the adapter assemblies (2) of different configurations are provided, positions and quantities of the anti-misinsertion protrusions (303) and the anti-misinsertion grooves (225) are configured to prevent mating between the male connectors (3) and the adapter assemblies (2) of different configurations.

22. The vehicle-mounted opto-electronic hybrid connector of any one of claims 1-20, further comprising a packaging shell (5), wherein the BOSA device (1) and the adapter assembly (2) are enclosed inside the packaging shell (5).

23. The vehicle-mounted opto-electronic hybrid connector of any one of claims 1-20, wherein the BOSA device (1) and the female conductive terminals (21) are respectively electrically connected to the PCB daughter board (4) by soldering.

24. The vehicle-mounted opto-electronic hybrid connector of any one of claims 1-20, further comprising a vehicle-mounted connector (6) and a PCB mother board (7), and the vehicle-mounted connector (6) is electrically connected to the PCB mother board (7) and the PCB daughter board (4).

25. The vehicle-mounted opto-electronic hybrid connector of any one of claims 1-20, wherein there are two female conductive terminals (21), each embedded and coupled with the first receiving slot (200) of a corresponding adapter unit (20); each female conductive terminal (21) is formed in a Z shape.
